# EUROPEAN PATENT APPLICATION

(11) **EP 4 659 926 A1**
(43) Date of publication of application: **10.12.2025**
(21) Application number: 24750323.8
(22) Date of filing: 31.01.2024
(51) Int. Cl.: B29B 11/14, B29C 70/34, B29C 70/68, B32B 3/30

(54) **CORE MATERIAL SHEET, COMPOSITE MATERIAL, METHOD FOR MANUFACTURING CORE MATERIAL SHEET, AND METHOD FOR MANUFACTURING COMPOSITE MATERIAL**

(30) Priority: 01.02.2023 JP 2023014304
(71) Applicant: Millefeuille Composite corp., Osaka-shi, Osaka 534-0026 (JP)
(72) Inventor: YONESHIMA Tomoya, Osaka-shi, Osaka 534-0026 (JP)
(74) Representative: Mewburn Ellis LLP
(86) International application number: PCT/JP2024/002996
(87) International publication number: WO 2024/162374

(57) **Abstract**

To provide a composite material with good formability into a three-dimensional shape and good productivity, a sheet for core material 10 to be used for manufacturing a composite material 30, comprising a sheet for core material layer 11 to be used for a core material layer 33 of the composite material 30 in which multiple divided portions divided from each other with cuts formed by half-cutting one face side of the sheet for core material layer in a direction of its thickness are arranged two-dimensionally in a plan view, the sheet for core material layer having the traces that half-cutting was conducted by press-cutting or laser-cutting.

## Description

### TECHNICAL FIELD

The present invention relates to a sheet for core material and the like to be used for manufacturing a composite material.

### BACKGROUND ART

As a structure of composite materials, sandwich structures are well known in which a core material layer is sandwiched between skin materials. The composite materials having a sandwich structure are featured by light weight and high stiffness and are expected to be used for various applications. For its core material layer, a material of low density and certainly high stiffness (for example a rigid foam and the like) are used. However, if such a material sheet is used as a core material layer as is, it is difficult to form the sheet material following a curved surface of a relatively high curvature, and is sometimes impossible to form the composite material to a desired three-dimensional shape.

Patent Document 1 describes a composite material which core material layer consists of a plurality of plate-shaped flakes as a composite material of good formability into a three-dimensional shape. This Patent Document 1 describes a method for manufacturing a composite material by conducting the step of transferring to a sheet for skin material (prepreg and the like) the plurality of plate-shaped flakes from a transfer sheet on which the plurality of plate-shaped flakes is attached.

Patent Document 2 describes a reinforcement structure made of a sheet-shaped base material. This reinforcement structure comprises a material attenuating portion that divides the base material into multiple material islands. The material islands are separated by the material attenuating portion but are connected with each other by a bridge portion. In the reinforcement structure described in Patent Document 2, the material attenuating portion is formed by, as the steps of a separating process, a cutting step and a sawing step for expanding the portion cut by the cutting step. Further after the separation process, the bridge portion connecting material islands is compression-molded by a bridge embossing machine.

### [Prior Art Technical Document]

### [Patent Document]

[Patent Document 1] Japanese Patent No. 7118481
[Patent Document 2] U.S. Patent Application Publication No. 2019/0099964A1

### DESCRIPTION OF THE DISCLOSURE

### [Problem(s) to be Solved by the Disclosure]

Meanwhile, according to the above-mentioned method for manufacturing a composite material in Patent Document 1, there are cases where the multiple plate-shaped pieces on the transfer sheet cannot be transferred onto a sheet for skin material (prepreg and the like) smoothly depending on the curvature of a three-dimensional shape to be formed, the adhesive properties of a material to be used for the composite material and the like. For example, in the case of transferring the plate-shaped pieces onto the sheet for skin material placed on a forming die having a high curvature, there is possibility that part of the plate-shaped pieces remains on the transfer sheet if the transferring step is not carefully done. In such a case, the transferring process takes labor, thereby reducing the productivity.

According to the reinforcement structure described in Patent Document 2, at least three steps such as
a cutting step, a sawing step and an embossing step are required to form the material attenuating portion and the bridge portion, and therefore enhancing the productivity of the reinforcement structure is not easy.

The present invention was made considering such situations and are to provide a composite material that has a good formability into a three-dimensional shape and a good productivity.

### [Means for Solving the Problems]

In order to solve the above problems, the inventors conceived applying half-cutting to process a sheet material to be used for a core material layer of a composite material to obtain a sheet material formable into a three-dimensional shape. Further, conventionally, a sheet material to be used for a core material layer has not been half-cut by press cutting or laser cutting. However the inventors conceived employing press-cutting or laser-cutting as a half-cutting method to enhance productivity. The first invention based on these conceptions is a sheet for core material to be used for manufacturing a composite material, comprising a sheet for core material layer to be used for a core material layer of the composite material in which a plurality of divided portions divided from each other with cuts formed by half-cutting one face side of the sheet for core material layer in a direction of its thickness are arranged two-dimensionally in a plan view, the sheet for core material layer having traces that half-cutting is conducted by press-cutting or laser-cutting.

According to the second invention, the first invention further comprising a retaining sheet attached to and covering the one face or the other face of the sheet for core material layer.

According to the third invention, in the sheet for core material of the first invention, adjacent divided portions are connected to each other by a portion extending through the thickness from a valley bottom of the cut to the other face of the sheet for core material layer.

According to the fourth invention, in any one of the first to third inventions, in the sheet for core material layer, part of dividing parts dividing the plurality of divided portions from each other consist of cuts made by half-cutting and the rest of the dividing parts consist of penetrated portions made by full-cutting.

According to the fifth invention, in any one of the first to third inventions, the cut takes a V-shaped valley shape in cross sectional view.

According to the sixth invention, in any one of the first to third inventions, a depth of the cut is 60% or more of a thickness of the sheet for core material layer.

The seventh invention is the composite material, comprising the sheet for core material layer according to any one of the inventions 1 to 3; and a skin material laminated on the sheet for core material layer.

According to the eighth invention, in the seventh invention, the composite material has a curved portion in a cross-sectional view, and wherein, in the curved portion, an opening side of the cuts in the sheet for core material layer face an expanding side of the curved portion in a cross-sectional view.

The ninth invention is a sheet for core material to be used for manufacturing a composite material, comprising a sheet for core material layer to be used for a core layer of the composite material in which a plurality of divided portions divided from each other with cuts formed by half-cutting one face side of the sheet for core material layer in a direction of its thickness are arranged two-dimensionally in a plan view and a retaining sheet attached to and covering the one face or the other face of the sheet for core material layer material.

The tenth invention is A method for manufacturing a sheet for core material comprising a sheet for core material layer to be used for a core material layer of a composite material, comprising a cutting step in which the sheet for core material layer, in which a plurality of divided portions divided from each other with cuts formed by half-cutting one face side of the sheet for core material layer in a direction of its thickness are arranged two-dimensionally in a plan view, is produced by forming the cuts; and wherein the half-cutting is conducted by press-cutting or laser-cutting.

The eleventh invention is the method for manufacturing a composite material in which the sheet for core material layer according to the tenth invention is laminated on a skin material, comprising a laminating step in which the sheet for core material is laminated on a sheet for skin material as a material for the skin material and a curing step in which the sheet for skin material is cured.

The twenty second invention is, to achieve the purpose of providing a composite material having a good formability into a three-dimensional shape and a good productivity, a method for manufacturing a composite material, comprising an attaching step in which a sheet for core material is attached to a sheet for skin material as a material for a skin material of the composite material, the sheet for core material comprising a sheet for core material layer in which a plurality of divided portions divided from each other with cuts formed by half-cutting one face side of the sheet for core material layer in a direction of its thickness are arranged two-dimensionally in a plan view and a retaining sheet attached to and covering one face or the other face of the sheet for core material layer material and a sheet peeling-off step, after the attaching step, in which the retaining sheet is peeled off from the sheet for core material layer to transfer the sheet for core material layer to the sheet for skin material.

### [Effect of the Disclosure]

According to the present invention, in a sheet for core material layer used for a core material layer of a composite material, multiple divided portions divided from each other with cuts formed by half-cutting (halfway cut in a direction of its thickness) are arranged two-dimensionally in a plan view. When the sheet for core material layer is bent, the cut portions are widened or narrowed. Therefore, although the sheet for core material layer is, as compared with an unprocessed sheet material (a sheet for core material layer both sides of which are flat), can readily be bent and follow a curved surface having a large curvature. In addition, since the divided portions formed by half-cutting are connected to each other, it is difficult that part of the divided portions detach when providing the sheet for core material layer on a sheet for skin material. In addition, since the half-cutting is conducted by press-cutting or laser-cutting, productivity is enhanced. According to the present invention, it is possible to provide a composite material with good formability into a three-dimensional shape and good productivity.

### BRIEF DESCRIPTION OF THE DRAWINGS

Fig. 1 is a cross-sectional view of a sheet for core material according to one embodiment.
Fig. 2 is a front view of the sheet for core material shown in Fig. 1.
Fig. 3 is a cross-sectional view of a composite material manufactured using the sheet for core material shown in Fig. 1.
Fig. 4 is a perspective view of the composite material shown in Fig. 3(a).
Fig. 5 is a schematic configuration diagram showing a production line used for manufacturing the sheet for core material according to the embodiment.
Fig. 6 is a cross-sectional view illustrating a manufacturing method of the sheet for core material according to the embodiment.
Fig. 7 is a cross-sectional view illustrating a manufacturing method of the composite material shown in Fig. 3(a).
Fig. 8(a) is a cross-sectional view of a composite material having a curved portion, Fig 8(b) is a cross-sectional view of a state after a laminating step of a method for manufacturing the composite material on a forming die having a concave surface, Fig. 8(c) is a cross-sectional view of a state after a laminating step of a method for manufacturing the composite material on a forming die having a convex surface and Fig. 8(d) is a cross-sectional view of an intermediate transfer sheet.
Fig. 9 is a cross-sectional view illustrating a method for manufacturing the composite material shown in Fig. 3(c).
Fig. 10 is a diagram illustrating a method for manufacturing a sheet for core material according to a first variation to the present embodiment.
Fig. 11 is a diagram illustrating half-cut traces in the sheet for core material according to the first variation to the embodiment.
Fig. 12 is a diagram illustrating a manufacturing method for forming a cut by twice laser-cutting in the first variation to the embodiment.
Fig. 13 is a cross-sectional view of a sheet for core material according to a second variation to the embodiment.
Fig. 14 is a cross-sectional view illustrating a method for manufacturing the sheet for core material according to the second variation to the embodiment.
Fig. 15 is a cross-sectional view illustrating a method for manufacturing a composite material according to the second variation to the embodiment.
Fig. 16 is a cross-sectional view of a sheet for core material according to another embodiment of the second variation to the embodiment.
Fig. 17 is a front view of the sheet for core material shown in Fig. 16.
Fig. 18 is a cross-sectional view of a sheet for core material according to a third variation to the embodiment.
Fig. 19 is a surface view of a sheet for core material according to a fourth variation to the embodiment.
Fig. 20 is a cross-sectional view of a sheet for core material according to a fifth variation to the embodiment.

### MODES FOR CARRYING OUT THE DISCLOSURE

One embodiment of the present disclosure will be described in detail by referring to the drawings. For avoidance of doubt, the embodiment hereafter is only an example of the present disclosure, and is not intended to be limiting the present disclosure, its application or the scope of application of the present disclosure.

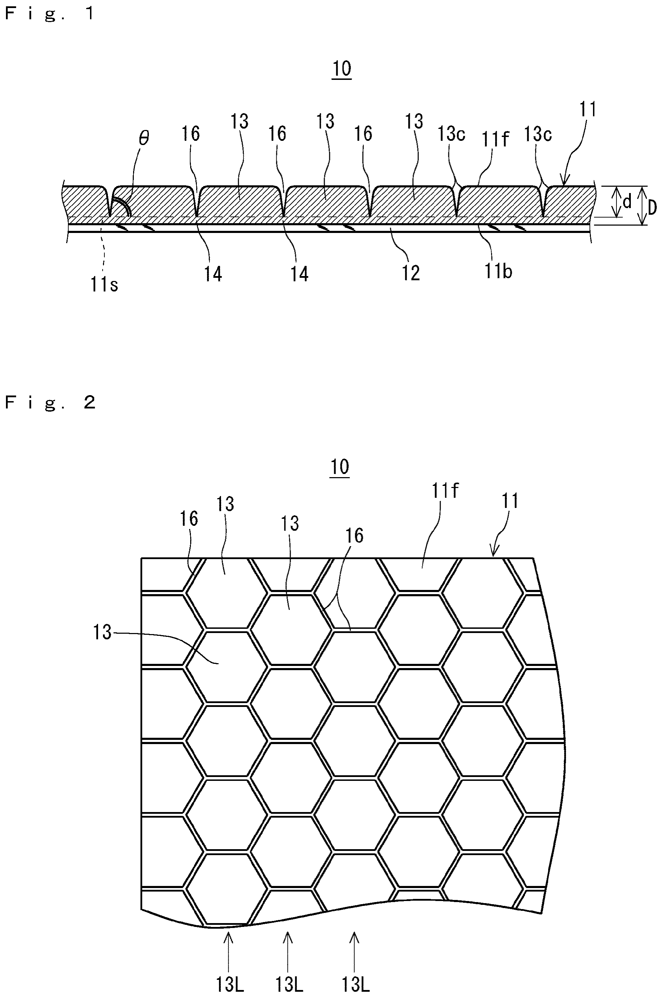

The present embodiment is a composite material 30 manufactured using a sheet for core material 10 having a cross-sectional configuration shown in Fig. 1. The sheet for core material 10 is an intermediate sheet manufactured in the course of manufacturing the composite material 30. Hereinafter, after the sheet for core material 10 is described, the composite material 30 will be described.

### [Configuration of the sheet for core material]

The sheet for core material 10 comprises a sheet for core material layer 11 used as a core material layer 33 of the composite material 30 and a retaining sheet 12 attached to and covering a back face 11b of the sheet for core material layer 11. In addition, a release sheet (a separate sheet) may be provided on the back face of the retaining sheet 12.

The sheet for core material layer 11 is a sheet material in which a plurality of divided portions (multiple divided portions 13) divided from each other with cuts 16 formed by half-cutting the front face 11f side (one face 11f side) are arranged two-dimensionally in a plan view as shown in Fig. 2. The adjacent divided portions 13 are separated by a common cut 16. The cut 16 is a dividing part dividing the adjacent divided portions 13 and provided around the entire periphery of the respective divided portions 13. In addition, the term "multiple" in "multiple divided portions" in this Specification means 10 or more. The number of the divided portions 16 in the sheet for core material layer 11 is 50 or more for example.

In the sheet for core material layer 11, the adjacent divided portions 13 are connected to each other by a connecting portion 14 extending through the thickness from a valley bottom of the cut 16 to the back face 11b (the other face 11b) of the sheet for core material layer 11. In the back face 11b of the sheet for core material layer 11, no cut is formed and multiple divided portions are connected to each other in the back face 11b side. The sheet for core material layer 11 comprises a sheet-shaped portion 11s extending through the thickness from the height position of the valley bottom of the cut 16 in a direction of thickness (the position of the dashed line shown in Fig. 1) to the back face 11b of the sheet for core material layer 11 and multiple divided portions 13 (plate-shaped portions 13) integrated with the sheet-shaped portion 11s.

The cut 16 takes a V-shaped valley shape in a cross-sectional view, that expands from the valley bottom toward the front face 11f side. In the valley bottom of the cut 16, the side faces of the adjacent divided portions 13 intersect with each other. In addition, the cross-sectional shape of the cut 16 may be any shape other than the V-shaped valley shape.

In the sheet for core material layer 11, the planar shape of the divided portion 13 (outer shape) is a regular polygon (regular hexagon in the present embodiment). To arrange the multiple divided portions 13 evenly in the sheet for core material layer 11, the planar shape of the divided portion 13 may be chosen from triangle, square, hexagon or equilateral pentagon. When the planar shape of the divided portion 13 be polygon, a chamfered portion may be provided on the respective corner portions of the divided portion 13 in a plan view. In addition, the divided portion 13 may be a figure having an outer periphery consisting of straight lines, curved lines, or a combination of straight and curved lines. The planar shape of the divided portion 13 may also be chosen from circular, oval and the like.

In the sheet for core material layer 11, the multiple divided portions 13 are arranged regularly and uniformly. In the present embodiment, the multiple divided portions 13 are arranged in such a staggered manner that the positions of the divided portions 13 are shifted by one half pitch between the adjacent columns 13L of the divided portions (see Fig. 2). In addition, in the present embodiment, since the planar shape of the respective divided portions 13 is regular hexagon, the multiple divided portions 13 take a honeycomb shape in a plan view. Likewise, the planar shape of the cuts 16 takes a honeycomb shape.

With respect to the plane dimensions, in the present embodiment where the divided portion 13 is a regular hexagon, the length of one side may be a value of 3 mm or more and 10 mm or less (for example 5 mm). With respect to the plane dimensions where the divided portion 13 is any shape other than regular hexagon, the average value of the distances between the center of gravity of the divided portion and the periphery thereof (average value around 360 degrees. radius in the case of circle) may be a value of 3 mm or more and 10 mm or less. However, the dimensions of the divided portion 13 may be out of the range described in this paragraph.

In a plan view, the respective one sides of the adjacent divided portions 13 face each other via the cut 16. The width of the cut 16 (the width at the position of the front face 11f in a thickness direction) is constant over the sheet for core material layer 11. This width can be adjusted in accordance with the width dimension and the like of a blade 24 to be used for half-cutting, and is appropriately designed in accordance with the size and the like of the divided portion 13.

The thickness D of the sheet for core material layer 11 may be, for example, less than 4 mm (for example 3 mm or less, or 2 mm or less). However, the thickness D of the sheet for core material layer 11 may be 4 mm or more. The depth d of the cut 16 in the sheet for core material layer 11 may be 60% or more of the thickness D of the sheet for core material layer 11 (preferably 70% or more, more preferably 80% or more). In the case where the depth d of the cut 16 is shallower than 60% of the thickness D of the sheet for core material layer 11, when a hard material is used for the sheet for core material layer 11, sufficient formability into a three-dimensional shape is difficult to obtain. In addition, in the present embodiment, the depth d of the cut 16 is substantially constant over the sheet for core material layer 11.

In the front face 11f of the sheet for core material layer 11, a chamfered portion 13c is formed around the entire perimeter of the respective divided portions 13. The chamfered portion 13c is a trace (cutting mark) indicating that half-cutting was done by press-cutting, and is an arc-shaped curved surface or an outwardly bulging curved surface like an arc in a cross-sectional view (see Fig. 1). The cross-sectional shape of the chamfered portion 13c is varied depending on the cross-sectional shape of the tip of the blade 24 and the like. Further, the angle θ (see Fig. 1) of the side face of the divided portion 13 is varied depending on the cross-sectional shape of the tip of the blade 24 and the like, too. The angle θ (see Fig. 1) of the side face of the divided portion 13 with the sheet for core material layer 11 placed on a flat surface may be 85° or less (for example 80° or less). when the angle θ be made less than 90°, the volume of the cut 16 portion in the core material layer 33 increases, thereby making the composite material 30 lighter.

For the sheet for core material layer 11, a hard material of lower density than skin materials 31 and 32 mentioned below may be used. For such a material, a resin (a hard resin foam etc.), a wood material (a plywood such as a balsa or a veneer, etc.), or a metal foam (aluminum alloy etc.) and the like may be chosen. In the present embodiment, the sheet for core material layer 11 is made of a hard resin foam or a wood material.

As the hard resin foam used for the sheet for core material layer 11, a polystyrene foam, a polyvinyl chloride foam, a cellulose acetate foam, a polyurethane foam, a phenol foam, an epoxy foam, an acrylic foam, polymethacrylimide foam, a polypropylene foam, a polyethylene terephthalate foam, a polycarbonate foam, a polyamideimide foam, a polyphenylene sulfide foam and the like can be exemplified.

The retaining sheet 12 is provided so that all the divided portions 13 remain connected even though the above-mentioned connecting portion 14 is damaged in the sheet for core material layer 11. For the retaining sheet 12, a flexible sheet material may be used. The retaining sheet 12 is, for example, thinner than the sheet for core material layer 11. The retaining sheet 12 is bonded to the back face 11b so as to cover the arranged area of the multiple divided portions 13 from the back face 11b. For this bonding, an adhesive or a pressure sensitive adhesive may be used. As the pressure sensitive adhesive, a peel-off type may be used. This can be said of all the pressure sensitive adhesives in the present specification.

For the retaining sheet 12, for example, a resin sheet or film (a thermoplastic resin sheet and the like) may be used. As the resin used for the retaining sheet 12, polyethylene, polypropylene, urethane, polyester, polyethylene terephthalate (PET), polycarbonate and the like may be used. The thickness of the retaining sheet 12 may be a value of 0.01 mm or more and 0.5 mm or less. In addition, for the retaining sheet 12, a mesh sheet using a pressure sensitive adhesive as a material or a non-woven fabric in which pressure sensitive adhesive fibers are entangled may be used. In addition, for the remaining sheet 12, a rubber or paper sheet (or film) may be used, too.

The sheet for core material 10 may be wound into a roll as a product. In this case, a long retaining sheet 12 of the same width is layered on a long sheet for core material layer 11.

### [Configuration of the composite material]

Next, the composite material 30 having a sandwich structure manufactured using the sheet for core material 10 will be described.

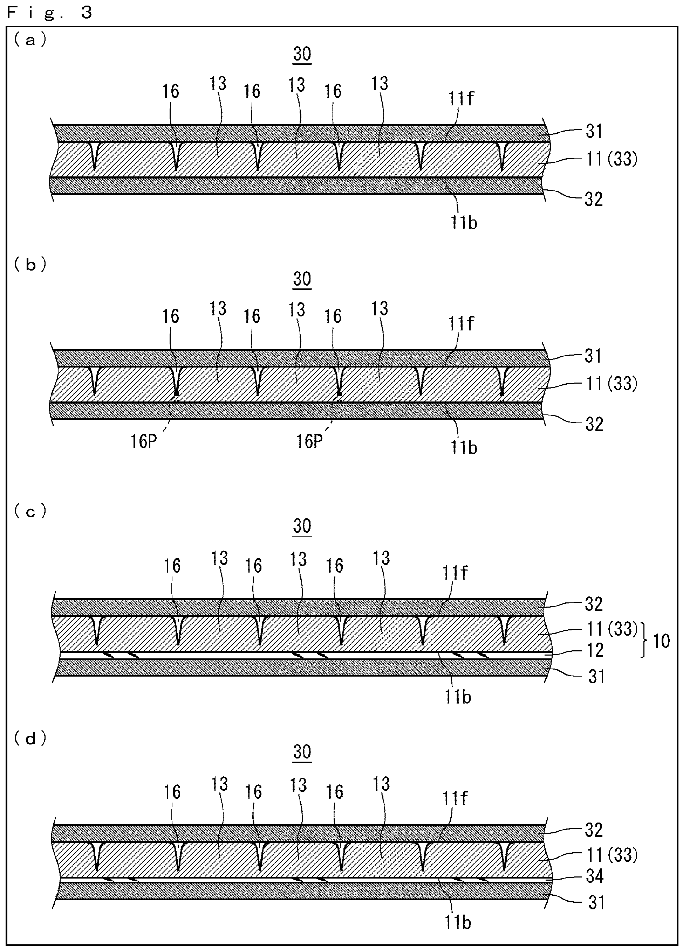

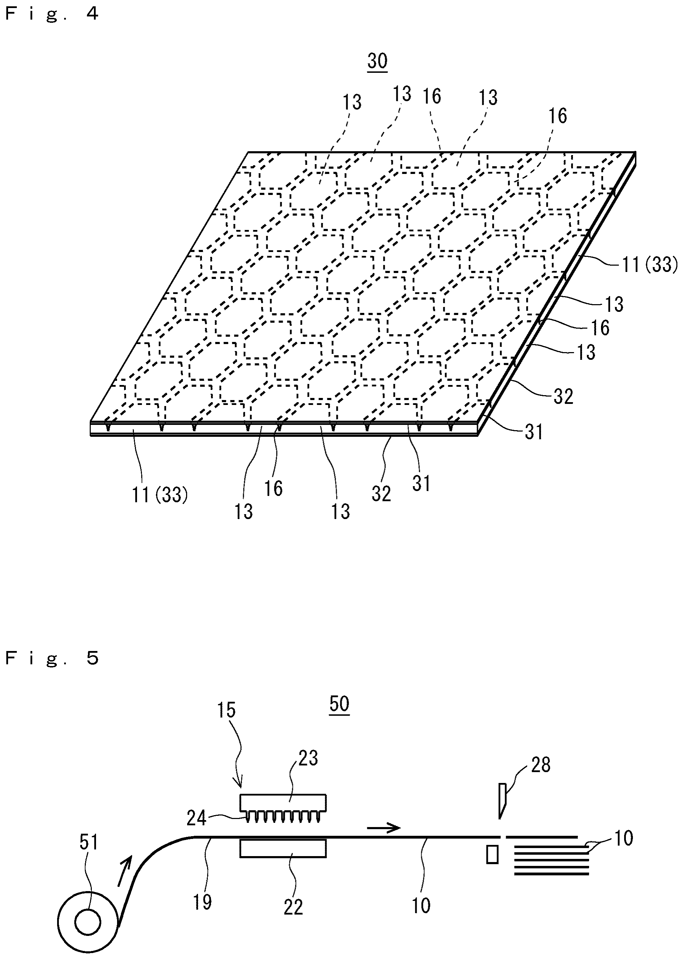

As shown in Figure 3(a), one embodiment of the composite material 30 comprises a sheet for core material layer 11 of a sheet for core material 10, a first skin material 31 laminated on the sheet for core material layer 11 and a second skin material 32 laminated on the opposite side of the sheet for core material layer 11 to the first skin material 31 and sandwiching the sheet for core material layer 11 together with the first skin material 31. Figure 4 is a perspective view of the composite material 30 shown in Figure 3(a). The sheet for core material layer 11 constitutes a core material layer 33 of the composite material 30. The composite material 30 is obtained where the sheet for core material 10 is used as a transfer sheet. In this case, in the sheet for core material 10, the sheet for core material layer 11 is peelably attached to the retaining sheet 12 using a pressure sensitive adhesive.

In the cuts 16 of the sheet for core material layer 11 of the composite material 30 shown in Fig. 3(a), the matrix melted from the sheet for skin material 31A of the skin material 31 is cured. In addition, in order to facilitate the flowing of the matrix melted from the sheet for skin material 32A of the skin material 32 into the cuts 16, a through hole 16P may be provided extending from the bottom of each cut 16 to the back face 11b of the sheet for core material layer 11, as shown in Fig. 3 (b). The through hole 16P may also be employed in the composite materials 30 shown in Figs. 3(c)-(d) and in the respective variations described later.

Another embodiment of the composite material 30 comprises a sheet for core material 10, a first skin material 31 laminated on the retaining sheet 12 side of the sheet for core material 10 and a second skin material 32 laminated on the sheet for core material layer 11 side of the sheet for core material 10 and sandwiching the sheet for core material 10 together with the first skin material 31, as shown in Figure 3(c). The sheet for core material layer 11 constitutes a core material layer 33. The composite material 30 is obtained where the entire sheet for core material 10 is used as the material for the composite material 30. In the cuts 16 in the sheet for core material layer 11 of the composite material 30, the matrix melted from the sheet for skin material 32A of the skin material 32 is cured.

In addition, in manufacturing the composite material 30 shown in Fig. 3(c), the retaining sheet 12, which does not melt during heating in the process of manufacturing the composite material 30 is used. However, the retaining sheet 12, which melts during heating in the process of manufacturing the composite material 30 may be used to manufacture the composite material 30. In this case, as shown in Fig. 3(d), an adhesive layer 34, which is made from the melted and cured retaining sheet 12, remains between the sheet for core material layer 11 and the second skin material 32. In addition, in Figures 3(c) and 3(d), by using a mesh sheet made of a pressure sensitive adhesive as its material, or a non-woven fabric in which pressure sensitive adhesive fibers are entangled, as the retaining sheet 12, an increase in thickness due to the retaining sheet 12 can be suppressed.

The skin materials 31 and 32 used in the composite material 30 are skin or panel materials made of a different material from the sheet for core material layer 11. The respective skin materials 31 and 32 may be made of any metallic, plastic, or inorganic material. In the present embodiment, a fiber-reinforced plastic is used as the material for the respective skin materials 31 and 32. As the fiber-reinforced plastic, a prepreg made by impregnating fibers in a resin (matrix), may be used.

As the fiber for the fiber-reinforced plastic, any of inorganic fiber, organic fiber, metallic fiber, or natural fiber may be used. For example, a glass fiber, a carbon fiber, an aramid fiber, a polyethylene fiber, a polyester fiber, a tungsten fiber, a steel fiber, a boron fiber, a flax fiber and the like may be used. As the matrix for the fiber-reinforced plastic, either a thermosetting resin or a thermoplastic resin may be used. For example, a polyester resin, an epoxy resin, a phenol resin, a vinylester resin, a polyimide resin, a polypropylene resin, a nylon resin, a polyetheretherketone resin, a polybutylene terephthalate resin, a bismaleimide resin and the like may be used. As the matrix for the fiber-reinforced plastic, a biodegradable resin may also be used.

The composite material 30 can be used, for example, for panel materials where light weight and stiffness are more emphasized than strength. Specifically, the composite material 30 can be used as a structural material for mobile vehicles such as aircrafts, automobiles or bicycles (sport bicycles and the like), electrical equipment, electronic equipment, office equipment, home appliances, medical equipment, panel materials for building materials and the like. In the case of mobile vehicles, the composite material 30 can be used as an aerodynamic component forming the exterior surface.

### [Method for manufacturing sheet for core material]

A method for manufacturing the sheet for core material 10 will be described below. The method for manufacturing the sheet for core material 10 is to conduct an attaching step in which the retaining sheet 12 is attached to a material sheet 111, which is a material for the sheet for core material layer 11, and a cutting step in which the material sheet 111 is subjected to a cutting process by half-cutting, the attaching step and the cutting step being conducted in this order.

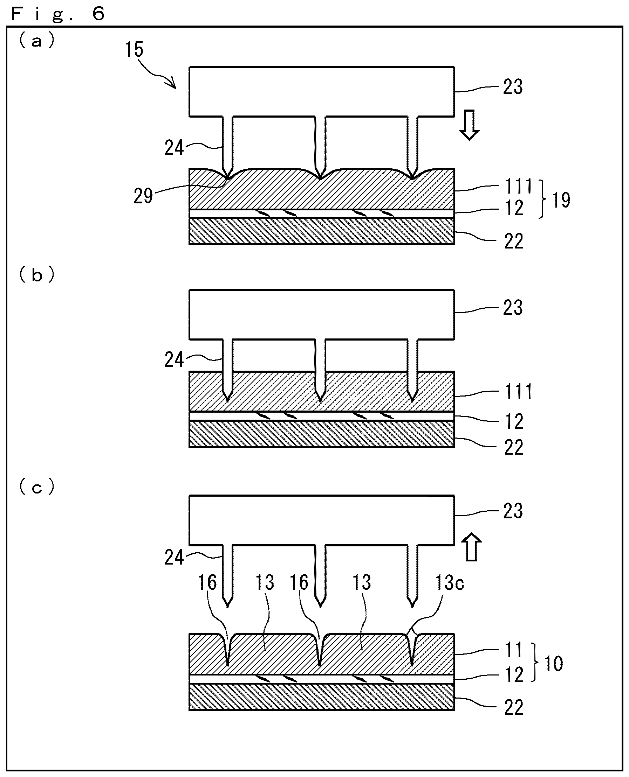

In the attaching step, a laminated sheet 19 (see Fig. 6(a)) is made by attaching the retaining sheet material 12 to the material sheet 111 using a pressure sensitive adhesive or an adhesive. The laminated sheet 19 is wound into a roll. In addition, the material sheet 111 and the retaining sheet material 12 can be attached by a press machine, a roller, an ultrasonic horn and the like capable of applying pressure or heating pressure. Further, for the retaining sheet 12, a sheet material with an adhesive agent layer or a pressure sensitive adhesive layer pre-formed thereon may be used, or an adhesive layer or a pressure sensitive adhesive layer may be formed on a non-adhesive sheet material.

In the cutting step, press-cutting is conducted by lowering the blade 24 of an upper die 23 to cut vertically the material sheet 111 of the laminated sheet 19 on a lower die 22 of a press machine 15. Specifically, the laminated sheet 19 wound into a roll is placed at a reel 51 of a production line 50 shown in Figure 5. The laminated sheet 19 is then unwound in a longitudinal direction and passed through the press machine 15 so that the material sheet 111 is on the top. In the press machine 15, as the press cutting described above, half-cutting is conducted in which the blade 24 cuts the material sheet 111 from its front surface to its intermediate position in a thickness direction. Figure 6(b) shows the state in which the blade 24 has finished descending. The planar shape of the blade 24 takes a honeycomb shape and corresponds to the planar shape of the cut 16 in the sheet for core material layer 11. In the cutting step, as shown in Fig. 6(c), the sheet for core material 10, comprising the sheet for core material layer 11 with the multiple divided portions 13 arranged two-dimensionally in a plan view and the retaining sheet 12, is manufactured.

Here, in press-cutting, as shown in Figure 6(a), portions 29 of the surface of the material sheet 111 to which the tip of the blade 24 first contacts are pressed in. Then, the areas around the portions 29 are plastically deformed. Therefore, after the press-cutting, a chamfered portion 13c is formed around the periphery of the divided portion 13 as a trace of plastic deformation, as shown in Fig. 6(c))

In addition, in the present embodiment, as shown in Fig. 5, the long sheet for core material 10 is cut at a predetermined length by a cutter 28 and divided into a plurality of sheet for core materials 10. However the sheet for core material 10 wound into a roll may be a product. Further, in the present embodiment, the press machine 15 in which the upper die 23 moves up and down relative to the lower die 22 is used, but a press machine in which press-cutting is conducted by wheel rolling pressurization using a wheel rolling die (die cutting roll) may also be used. Furthermore, in the present embodiment, the attaching step is conducted before the cutting step, but the attaching step may be conducted after the cutting step. In this case, the retaining sheet 12 may be attached to the front face 11f side (the opening side of the cut 16) of the sheet for core material 10, or the retaining sheet 12 may be attached to the back face 11b side of the sheet for core material 10.

### [Method for manufacturing the composite material]

A method for manufacturing the composite material 30 will be described below.

### [Method for manufacturing the composite material shown in Fig. 3(a)]

The method for manufacturing the composite material 30 shown in Fig. 3(a) is to conduct a transfer step in which the sheet for core material layer 11 of the sheet for core material 10 is transferred to a first sheet for skin material 31A and a laminating step in which a second sheet for skin material 32A is laminated on the sheet for core material layer 11, the transfer step and the lamination step being conducted in this order. The respective sheets for skin material 31A and 32A are the materials of the skin materials 31 and 32 described above, and for example, a prepreg (a prepreg sheet) in a semi-cured state may be used.

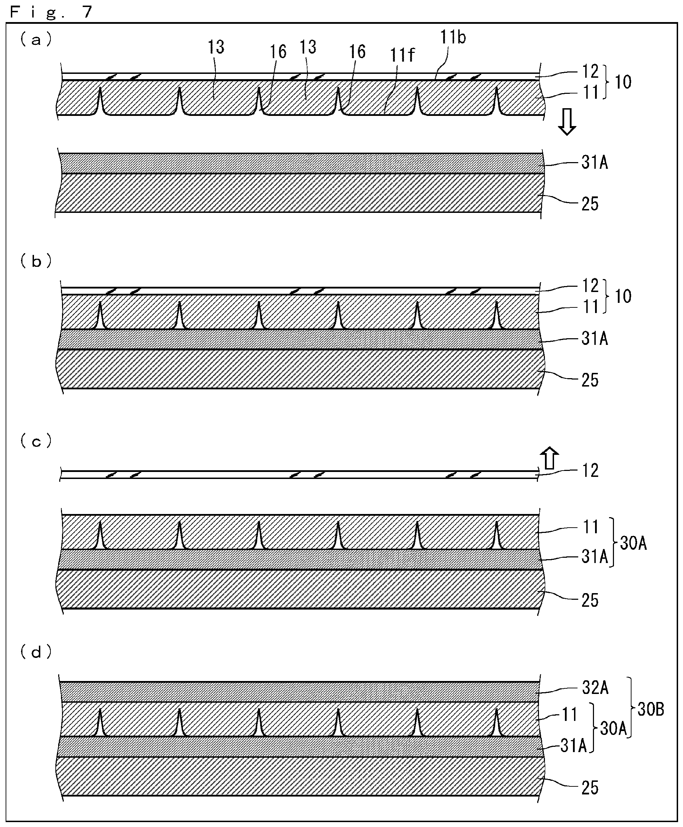

In the transfer step, as shown in Fig. 7(a), the sheet for core material 10 is spaced apart and arranged with the sheet for core material layer 11 side facing the first sheet for skin material 31A on the forming die 25. Next, as shown in Fig. 7(b), the sheet for core material layer 11 of the sheet for core material 10 is laminated on and attached to the first sheet for skin material 31A (attaching step). The first sheet for skin material 31A has an adhesive surface. Then, as shown in Fig. 7(c), the retaining sheet 12 is peeled off from the sheet for core material layer 11 (sheet peeling-off step). Then, since the adhesive strength of the first sheet for skin material 31A to the sheet for core material layer 11 is greater than that of the retaining sheet 12 to the sheet for core material layer 11, the sheet for core material layer 11 is transferred from the retaining sheet 12 to the first sheet for skin material 31A

Next, in the laminating step, the second sheet for skin material 32A is laminated on and attached to the sheet for core material layer 11 of the laminated material 30A obtained in the transfer step, as shown in Fig. 7(d). The second sheet for skin material 32A has an adhesive surface. As a result, a laminated material 30B in which the sheet for core material layer 11 is sandwiched between a pair of sheets for skin material 31A and 32A is obtained.

Next, where the matrix of the prepreg used for the respective sheets for skin material 31A and 32A is a thermosetting resin (for example epoxy resin), a forming step (curing step) is conducted. In the forming step, the laminated material 30B obtained in the laminating step is sealed using a bagging film. Then, the laminated material 30B sealed in the bagging film is heated in an autoclave at a predetermined temperature and pressure (for example 130°C, 0.2 MPa) for a predetermined time (for example 2 hours). In this heating process, the sheets for skin material 31A and 32A in a semi-cured state become fully cured skin materials 31 and 32. As a result, a composite material 30 cured in a predetermined shape is completed.

Where the matrix of the prepreg used for the respective sheets for skin material 31A and 32A is a thermoplastic resin (for example polyamide resin, polypropylene resin, polyetheretherketone resin), the curing step is conducted by cooling the laminated material 30B in an atmosphere at a temperature lower than the curing temperature of the matrix (for example a room temperature) after the forming step such as pressure and heat pressing so that a composite material 30 is completed.

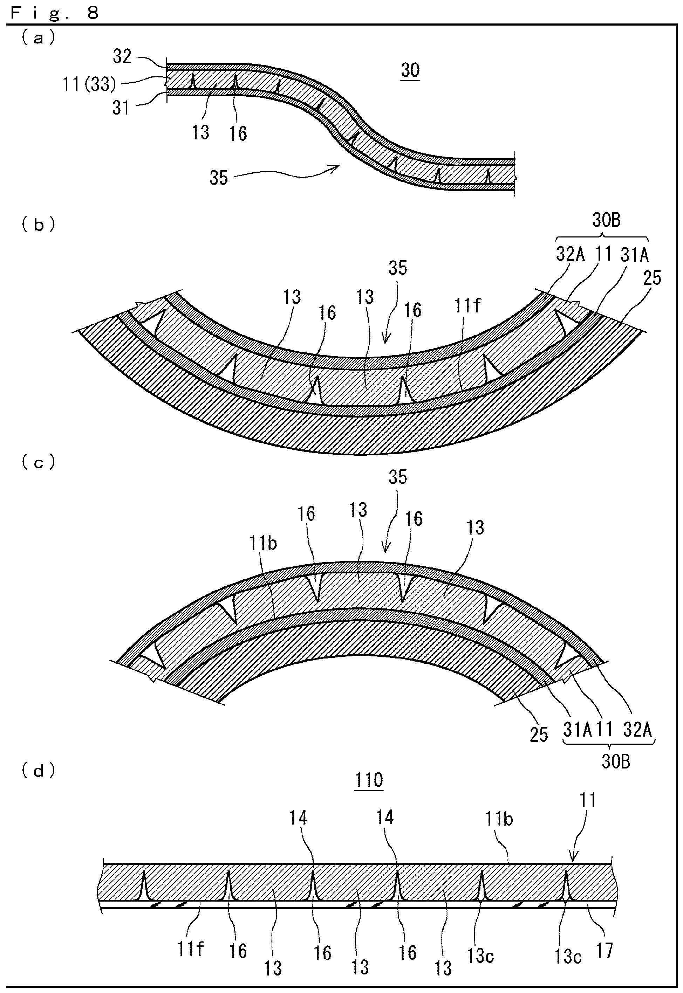

In addition, as the composite material 30, a composite material 30 having a curved portion 35 in a cross-sectional view (see Fig. 8(a)) can be manufactured. Further, in the case of manufacturing such a composite material 30, the opening side (opposite side to the valley) of the cuts 16 of the sheet for core material layer 11 can be made to face the expanding side of the curved portion 35 in a cross-sectional view. In the case of manufacturing a composite material 30 having a plurality of curved portions 35 in a cross-sectional view, the opening side of the cuts 16 of the sheet for core material layer 11 in a cross-sectional view can be made to face the bulging side of the curved portion 35 having the greatest curvature.

A method for manufacturing the composite material 30 in this case will be described using the case where the entire composite material 30 is the curved portion 35 as an example. First, where the composite material 30 is manufactured on the forming die 25 (see Fig. 8(b)) having a concave curved surface (concave surface) on its front side, in the transfer step, the sheet for core material layer 11 side of the sheet for core material 10 is attached to the first sheet for skin material 31A on the forming die 25 as in Fig. 7 and then the retaining sheet 12 is peeled off. Then, by laminating the second sheet for skin material 32A in the laminating step, the laminated material 30B shown in Fig. 8(b) is obtained.

On the other hand, where the composite material 30 is manufactured on the forming die 25 (see Fig. 8(c)) having a curved surface (a convex surface) that expands on its front side, a preparation step is first conducted in the transfer step to manufacture the intermediate transfer sheet 110 shown in Fig. 8(d). In the preparation step, the front face 11f of the sheet for core material layer 11 of the sheet for core material 10 is attached to a sheet material 17, and the retaining sheet 12 is peeled off to transfer the sheet for core material layer 11 to make an intermediate transfer sheet 110. In the intermediate transfer sheet 110, the sheet for core material layer 11 is peelably attached to the sheet material 17 using a pressure sensitive adhesive. Then, the back face 11b of the sheet for core material layer 11 of the intermediate transfer sheet 110 is attached to the first sheet for skin material 31A on the forming die 25, and the sheet material 17 is peeled off to transfer the sheet for core material layer 11. Then, by laminating the second sheet for skin material 32A in the laminating step, the laminated material 30B shown in Fig. 8(c) is obtained.

### <Method for manufacturing composite materials shown in Fig. 3(c) or Fig. 3(d)

A method for manufacturing the composite material 30 shown in Fig. 3(c) or Fig. 3(d) is conduct a first laminating step in which the sheet for core material 10 is laminated on the first sheet for skin material 31A, and a second laminating step in which the second sheet for skin material 32A is laminated on the sheet for core material 10, the first lamination step and the second lamination step being conducted in this order.

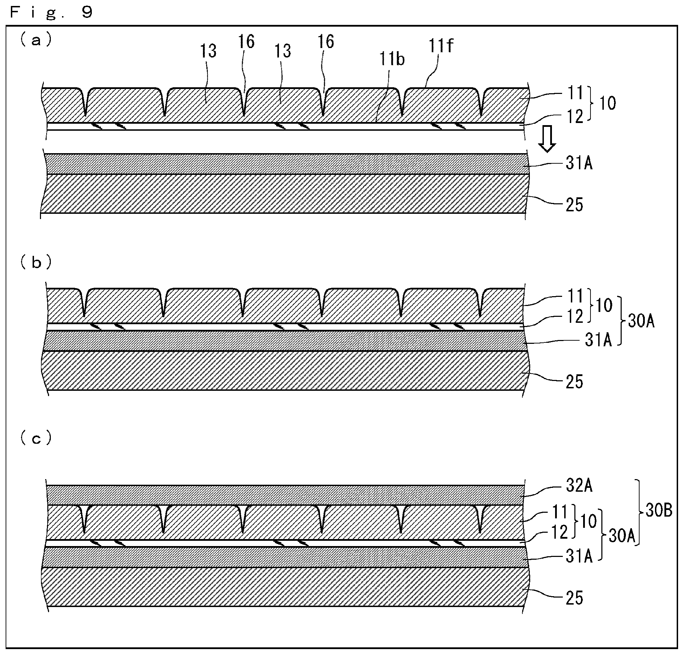

In the first laminating step, as shown in Fig. 9(a), the sheet for core material 10 is placed away from the first sheet for skin material 31A on the forming die 25. Next, as shown in Fig. 9(b), the sheet for core material 10 is laminated on and attached to the first sheet for skin material 31A. In Fig. 9(b), it is noted that the retaining sheet 12 is attached to the first sheet for skin material 31A, but the sheet for core material layer 11 may be attached to the first sheet for skin material 31A.

Next, in the second laminating step, the second sheet for skin material 32A is laminated on and attached to the sheet for core material 10 of the laminated material 30A obtained in the first laminating step, as shown in Fig. 9(c). As a result, the laminated material 30B with the sheet for core material 10 sandwiched between a pair of sheets for skin material 31A and 32A is obtained

Following the second laminating step, where the matrix of the prepregs used for the respective sheets for skin material 31A and 32A is a thermosetting resin, the forming step described above is conducted. Where the retaining sheet 12 is used that does not melt during the heating process of this forming step, the composite material 30 shown in Fig. 3(c) is produced. On the other hand, where the retaining sheet 12 that melts during the heating process of this forming step is used, the composite material 30 shown in Fig. 3(d) is manufactured.

In the case of a thermoplastic resin, the forming and curing steps described above are conducted. Where the retaining sheet 12 that does not melt during the heating process of the forming step is used, the composite material 30 shown in Fig. 3(c) is produced. On the other hand, where the retaining sheet 12 that melts during the heating process of the forming step is used, the composite material 30 shown in Fig. 3(d) is manufactured.

In the method for manufacturing the composite material 30 shown in Fig. 3(c) or Fig. 3(d), the above-mentioned preparation step is not necessary where the forming die 25 having a concave or convex surface is used. In the case of the forming die 25 having a concave surface, the sheet for core material layer 11 side of the sheet for core material 10 is attached to the sheet for skin material 31A on the forming die 25 in the first laminating step. On the other hand, in the case of the forming die 25 having a convex surface, the retaining sheet 12 side of the sheet for core material 10 is attached to the first sheet for skin material 31A on the forming die 25 in the first laminating step.

### [Effect of the present embodiment and the like]

According to the present embodiment, in the sheet for core material layer 11 used as the core material layer 33 of the composite material 30, multiple divided portions divided from each other with cuts formed by half-cutting in a direction of its thickness are arranged two-dimensionally in a plan view. When the sheet for core material layer 11 is bent, the cut 16 portions are widened or narrowed (see Fig. 8(a)). Therefore, although the sheet for core material layer 11 is made of a material of poor toughness (a rigid foam), it can readily be bent as compared with an unprocessed sheet material and can follow a curved surface having a large curvature. In addition, since the divided portions 13 formed by half-cutting are connected to each other, it is difficult that part of the divided portions 13 detach in providing the sheet for core material layer 11 on the sheet for skin material 31A. In addition, since the half-cutting is conducted by press-cutting or laser-cutting, productivity is good. According to the present embodiment, it is possible to provide the composite material 30 with good formability into a three-dimensional shape and good productivity.

Further, according to the present embodiment, the retaining sheet 12 is attached to cover the other side 11b (or one side 11f) of the sheet for core material layer 11, and the adjacent divided portions 13 are connected to each other by the connecting portion 14 described above. Therefore, the sheet for core material 10 including the sheet for core material layer 11 is easy to handle, and the sheet for core material layer 11 can readily be placed on the sheet for skin material 31A without part of the divided portions 13 detaching. According to the present embodiment, it is possible to provide the composite material 30 that is even easier to manufacture.

Further, according to the present embodiment, the cut 16 takes a V-shaped valley shape in a cross-sectional view. Here, in the case that a bottom face having a certain width (the width of the cut 16 in a plan view) is formed at the valley bottom of the cut 16 unlike the present embodiment (in the case of Patent Document 2, where the cut 16 does not take a V-shaped valley shape), for example, when the sheet for core material layer 11 is bent so that the front face 11f side expands, bending moment tends to become large at the position where the bottom face of the cut 16 intersects with the side face of the divided portion 13. In contrast to this, according to the present embodiment, bending moment is prevented from increasing at the above position. Therefore, the sheet for core material layer 11 is less likely to be damaged when bent, and there are fewer restrictions in bending when forming it into a three-dimensional shape. According to the present embodiment, it is possible to provide the composite material 30 having an even better formability into a three-dimensional shape.

Further, according to the present embodiment, prepreg is used as the material for the respective skin materials 31 and 32. Therefore, in conducting a heat treatment, the resin of the prepreg flows into the cuts 16 and fills the cuts (gaps) 16 in the core layer 33. The resin that flows into the cuts 16 is cured in the gaps 16. The resin cured in the gaps 16 includes short fibers that flowed there with the resin from the prepreg. Therefore, local strength reduction of the composite material 30 can be suppressed.

### [First variation to the present embodiment]

According to the present variation, half-cut cuts 16 are formed in the material sheet 111 by laser-cutting instead of press-cutting. As in the embodiment described above, the cut 16 formed by laser-cutting takes a V-shaped valley shape expanding from the valley bottom toward the front face side in a cross-sectional view.

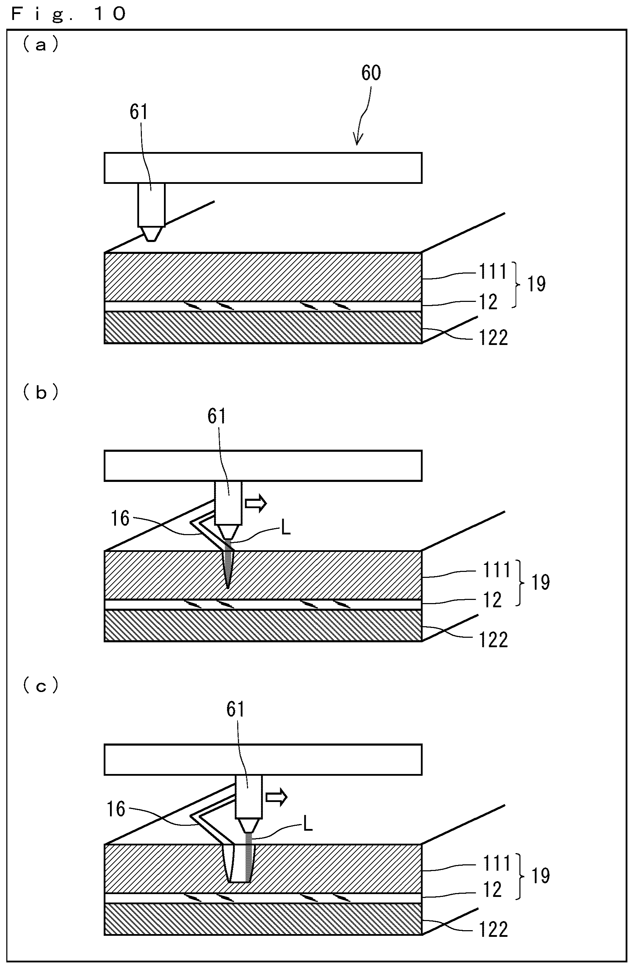

In manufacturing the sheet for core material 10, a laser-cutting machine 60 (see Fig. 10(a)) is used, for example, which is capable of moving a laser irradiation head 61 in a plane along the planned shape of the cut 16 in a plan view. In laser cutting with the laser cutting machine 60, the intensity of the laser beam L emitted from the laser irradiation head 61 is adjusted so that the material sheet 111 is half-cut. Specifically, the intensity of the laser beam L is adjusted based on the thickness and material (hardness and the like) of the material sheet 111, the moving speed of the laser irradiation head 61 and the like.

In the cutting step, the laser irradiation head 61 moves in a plane along the planned shape of the cut 16 while irradiating the laser beam L toward the material sheet 111 on a base 122, as shown in Figs. 10(b) and 10(c), so that a sheet for core material layer 11 is produced in which a plurality of divided portions 13 divided from each other with cuts formed by half-cutting in a direction are arranged two-dimensionally in a plan view. In addition, during the planar movement of the laser irradiation head 61, there occurs a point (a corner of the polygonal cut 16 surrounding the divided portion 13) over which the laser irradiation head 61 passes twice. In that corner, a through hole 16P (see Figure 11 (c)) may be formed because the laser beam L is irradiated twice. In addition, although the retaining sheet 12 is attached to the lower face of the material sheet 111 shown in Figure 10, the retaining sheet 12 may be omitted.

In the present variation, the sheet for core material layer 11 has a discolored portion B, which is a portion caused by the laser beam L irradiation, as a trace that half-cutting was made by laser-cutting. Where a resin material such as a hard resin foam is used for the sheet for core material layer 11, the color of the discolored portion B is reddish, for example. Figs. 11 (a)-(c) are photographs of the sheet for core material layer 11 in which half-cutting was done by laser-cutting. Fig. 11 (b) is a photograph of the front face 11f side of the sheet for core material layer 11, and Fig. 11 (c) is a photograph of the back face 11b side of the sheet for core material layer 11. In Figs. 11 (a)-(c), the discolored portion B is formed mainly on the side face of the cut 16, as well as at the edge portion of the opening side of the cut 16 and at the valley bottom portion. In addition, in the back face 11b side of the sheet for core material layer 11, through holes 16P are formed in the corners of the hexagonal cut 16, and the through holes 16P are the traces indicating half-cutting was done by laser-cutting. In addition, although the figure is omitted, where a wood material is used for the sheet for core material layer 11, the discolored portion B will have a color as if the surface of the wood material was burnt (for example a slightly darker color than the original color of the wood material).

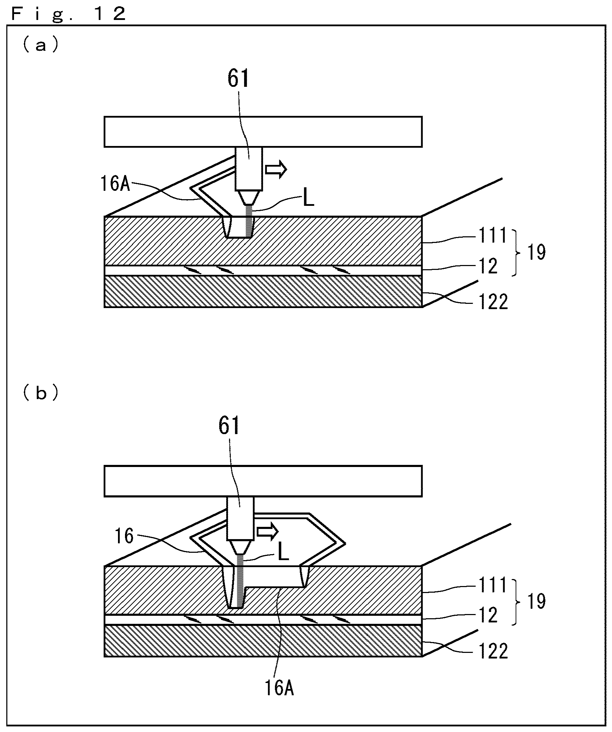

Further, in Figure 10, the cut 16 is formed by a single laser cutting, but as shown in Figure 12, may be formed by multiple laser cuttings (twice in Figure 12). In this case, the intensity of the laser beam L and the like is adjusted so that the cut depth of the material sheet 111 per one laser cutting may be small. Figure 12(a) shows the first laser cutting. In the first laser cutting, a shallow cut 16A is formed in the material sheet 111 so that the cut depth in the material sheet 111 (a material of the sheet for core material layer 11) is less than half the depth of the cut 16 to be formed. Figure 12(b) shows the second laser cutting. In the second laser cutting, the laser irradiation head 61 passes through the same position (the position of the cut 16A) as the first laser cutting in a plan view, and the laser beam L is irradiated at the same position as the first laser cutting. The material sheet 111 is then cut to the planned depth of the cut 16 to form the cut 16.

Here, since the quality of the material of the material sheet 111 is not uniform and the output of the laser beam may vary, if a deep cut 16 is attempted to be formed by a single laser cutting, there may unintentionally occur a portion of the material sheet 111 that is fully cut from the front face to the back face, and during handling the sheet for core material layer 11, part of the divided portions 13 may possibly detach. On the other hand, where the cut 16 is formed by a plurality of laser cuttings, the variation of cut depth per one cutting is small, and the full cutting mentioned above is unlikely to occur unintentionally. Therefore, the sheet for core material layer 11 can easily be manufactured which has a large depth d of the cut 16 and a good formability into a three-dimensional shape, wherein part of the divided portions 13 are unlikely to detach during handling.

### [Second variation to the present embodiment]

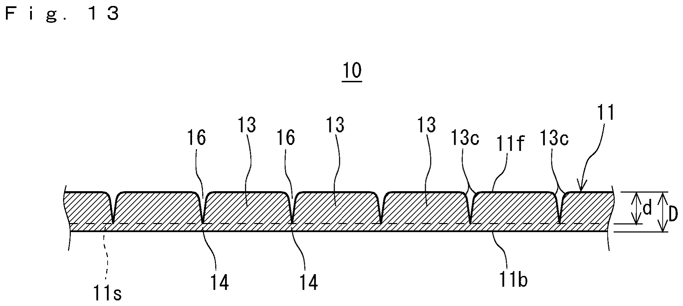

In the present variation, the sheet for core material 10 does not have the retaining sheet 12, as shown in Figure 13. The sheet for core material 10 consists of only the sheet for core material layer 11 of the above embodiment. Further, in the sheet for core material layer 11, adjacent divided portions 13 are connected to each other by a connecting portion 14 extending through the thickness from the valley bottom of the cut 16 in the sheet for core material layer 11 to the back face 11b side (other side 11b) of the sheet for core material layer 11. The sheet for core material layer 11 comprises the sheet-shaped portion 11s described above and multiple divided portions 13 (plate-shaped portions 13) integrated with the sheet-shaped portion 11s.

The thickness D of the sheet for core material layer 11 can be, for example, less than 4 mm (for example less than 3 mm or less, or 2 mm or less), as in the embodiment described above. Further, the depth d of the cut 16 in the sheet for core material layer 11 can be 60% or more (preferably 70% or more, more preferably 80% or more) of the thickness D of the sheet for core material layer 11, as in the embodiment described above.

The composite material 30 manufactured using the sheet for core material 10 has the same configuration as the composite material 30 shown in Figures 3(a) and 4, and comprises the sheet for core material layer 11 (core material layer 33), a first skin material 31 laminated on the sheet for core material layer 11, a second skin material 32 laminated on the opposite side of the sheet for core material layer 11 to the first skin material 31.

### <Method for manufacturing the sheet for core material in the second variation>

The method for manufacturing the sheet for core material 10 in the present variation is to conduct a cutting step for manufacturing the sheet for core material layer 11 in which multiple divided portions divided from each other with the cuts 16 formed by half-cutting (half-cutting by press-cutting or laser-cutting) the front face side (one face side) of a material sheet 111 are arranged two-dimensionally in a plan view.

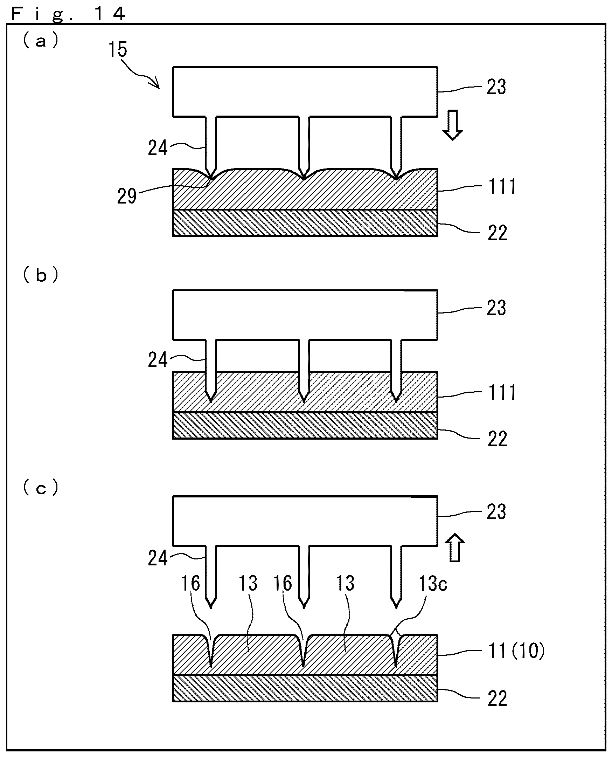

In the cutting step, press cutting is conducted so that the blade 24 of the upper die 23 is lowered to cut vertically into the material sheet 111 on the lower die 22 of the press machine 15. Specifically, in the production line 50 shown in Figure 5, instead of the laminated sheet 19, a rolled material sheet 111 is placed on the reel 51. The material sheet 111 is then unrolled in a longitudinal direction and passed through the press device 15. In the press machine 15, half-cutting is conducted as the press cutting described above. Figure 14(b) represents the state in which the blade 24 has finished descending. The planar shape of the blade 24 takes a honeycomb shape and corresponds to the planar shape of the cut 16 in the sheet for core material layer 11. In the cutting step, as shown in Fig. 14(c), the sheet for core material 10 is manufactured, comprising the sheet for core material layer 11 in which multiple divided portions 13 are arranged two-dimensionally. The sheet for core material layer 11 in the present variation has the traces (chamfered portions 13c) where half-cutting was conducted by press-cutting. In the present variation, the half-cutting can also be conducted by laser-cutting. In this case, the sheet for core material layer 11 has a discolored portion B as the trace described above.

### <Method for manufacturing the composite material of the second variation>

The method for manufacturing the composite material 30 is to conduct a first laminating step in which the sheet for core material 10 is laminated on a first sheet for skin material 31A, and a second laminating step in which the second sheet for skin material 32A is laminated on the sheet for core material 10, the first and second laminating steps being conducted in this order.

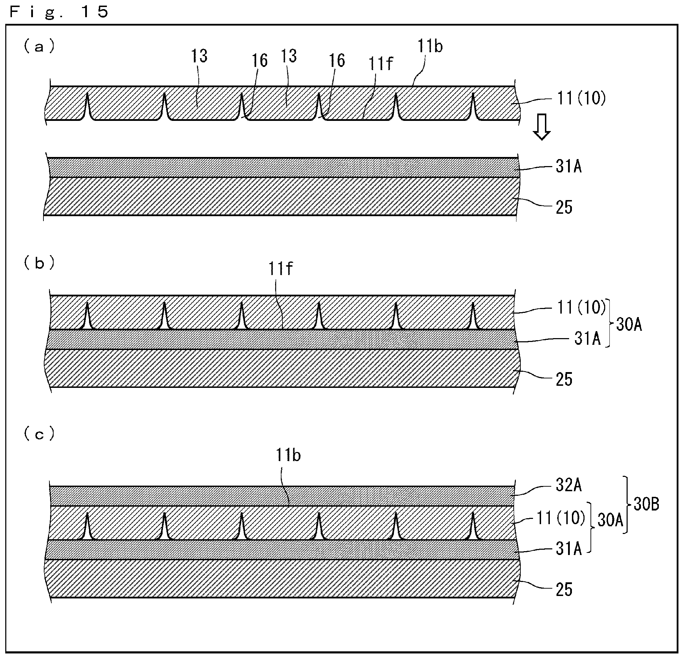

In the first laminating step, as shown in Fig. 15(a), the sheet for core material 10 is placed apart from the first sheet for skin material 31A on a forming die 25. Next, as shown in Fig. 15(b), the sheet for core material 10 is laminated on and attached to the first sheet for skin material 31A. In addition, in Fig. 15(b), the front face 11f of the sheet for core material layer 11 is attached to the first sheet for skin material 31A, but the back face 11b of the sheet for core material layer 11 may be attached to the first sheet for skin material 31A.

Next, in the second laminating step, the second sheet for skin material 32A is laminated on and attached to the sheet for core material 10 of a laminated material 30A obtained in the first laminating step, as shown in Fig. 15(c). As a result, a laminated material 30B in which the sheet for core material 10 is sandwiched between the pair of sheets for skin material 31A and 32A is obtained.

Following the second laminating step, where the matrix of the prepreg used for the respective sheets for skin material 31A and 32A is a thermosetting resin, the forming step described above is conducted. Further, in the case of a thermoplastic resin, the forming step and curing step described above are conducted.

In addition, in the first laminating step, where the composite material 30 is manufactured on a forming die 25 having a concave surface (see Fig. 8 (b)), the front face 11f side of the sheet for core material layer 11 may be attached to the first sheet for skin material 31A on the forming die 25. On the other hand, where the composite material 30 is manufactured on a die 25 having a convex surface (see Figure 8(c)), the back face 11b side of the sheet for core material layer 11 may be attached to the first sheet for skin material 31A on the forming die 25.

### <Effect of the present variation and the like>

In the present variation, the retaining sheet 12 is not used in the sheet for core material 10. As a result, it is possible to provide the composite material 30 that has good formability into a three-dimensional shape and a simpler structure than the embodiment described above and that is easier to manufacture.

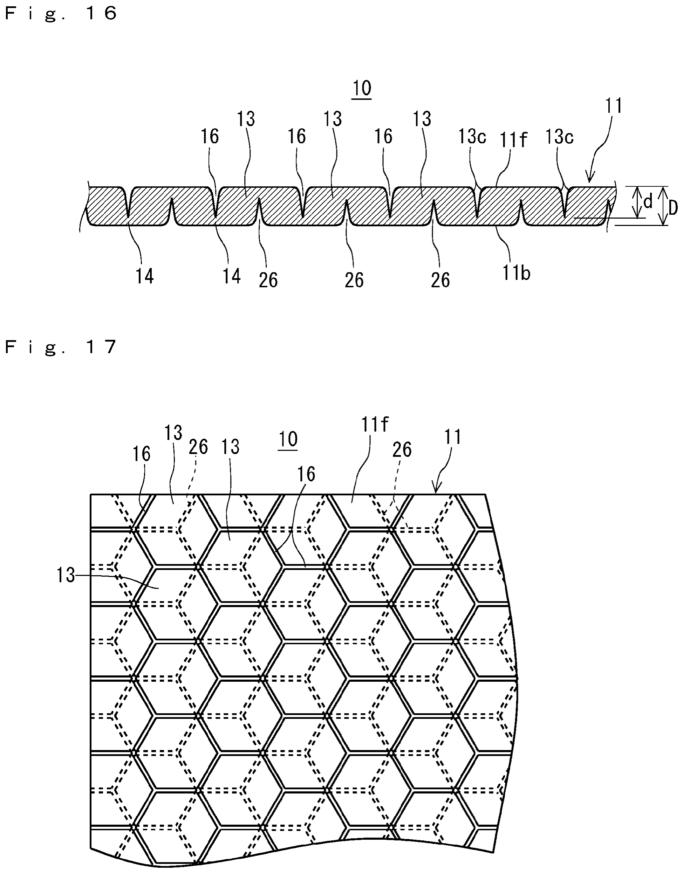

In the present variation, as shown in Fig. 16, cuts 26 may be formed in the back face 11b of the sheet for core material layer 11. In this case, as shown in Fig. 17, honeycomb-shaped cuts 26 in a plan view can be formed so that they do not completely overlap the cuts 16 in the front face 11f. In the case of Fig. 17, the portions where the cuts 16 and the cuts 26 overlap each other are the corners of the divided portions 13 in a plan view, so that the strength reduction of the connecting portion 14 described above is suppressed.

### [Third variation to the present embodiment]

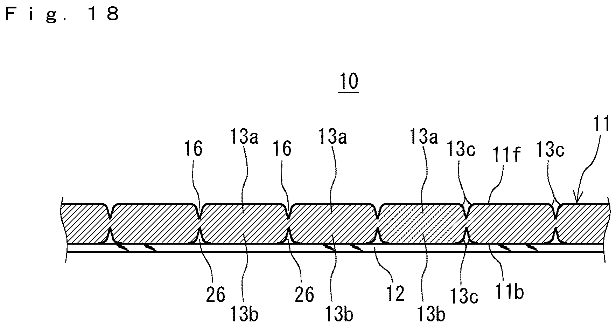

In the present variation, as shown in Fig. 18, cuts 26 formed by half-cutting are also formed in the back face 11b of the sheet for core material layer 11 of the sheet for core material 10. In the front face 11f of the sheet for core material layer 11, multiple divided portions 13 divided from each other with the cuts 16 are arranged two-dimensionally, and in the back face 11b of the sheet for core material layer 11, multiple divided portions 13b divided from each other with the cuts 26 are arranged two-dimensionally. The cut 16 is provided around the entire periphery of the respective divided portions 13a. The cut 26 is provided around the entire periphery of the respective divided portions 13b. The cuts 16 and 26 are formed so that they overlap each other in a plan view, and the peripheries of the divided portions 13a and 13b overlap each other in a plan view. The cuts 16 and 26 take a V-shaped valley shape in a cross-sectional view, expanding from the valley bottom toward the opening side. In addition, the sheet for core material 10 shown in Fig. 18 has a sheet for core material layer 11 and the retaining sheet 12, but the retaining sheet 12 may be omitted.

The method for manufacturing the sheet for core material 10 of the present variation is to conduct a front side cutting step of conducting a cutting process to form multiple divided portions 13a with the cuts 16 formed by half-cutting (half-cutting by press-cutting or laser-cutting) in the front face of the material sheet 111, a back side cutting step of conducting a cutting process to form multiple divided portions 13b with the cuts 26 formed by half-cutting (half-cutting by press-cutting or laser-cutting) the back face of the material sheet 111, and an attaching step of attaching the retaining sheet 12 to the material sheet 111. Either of the front side cutting step or the back side cutting step may be conducted first, or they may be conducted at the same time. Further, the attaching step is conducted after the cutting process of the side of the material sheet 111 to which the retaining sheet 12 is attached. In the sheet for core material layer 11 shown in Figure 18, the traces (chamfered portions 13c) remain on both the front and back faces that half-cutting was conducted by press-cutting. Where the half cutting is conducted by laser-cutting, the discolored portion B remains as its trace.

### [Fourth variation to the present embodiment]

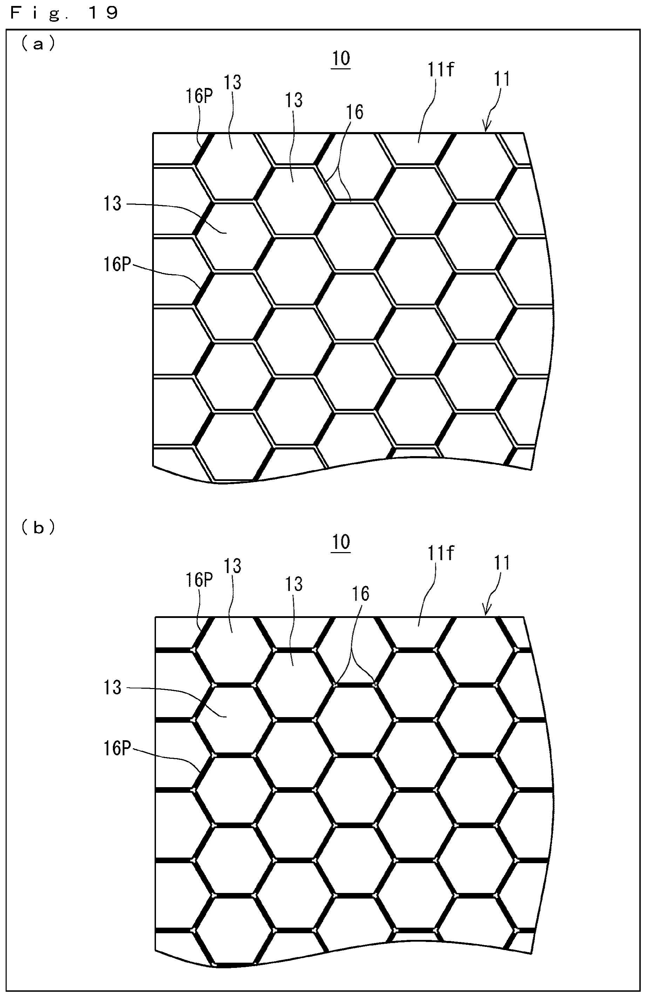

In the present variation, in the sheet for core material layer 11, part of dividing parts dividing a plurality of divided portions 13 consist of the cut 16 made by half-cutting, and the rest of the dividing parts consist of penetrated portions 16P made by full-cutting. The respective divided portions 13 are formed by the dividing parts having a half-cut portion. One example of this configuration is the sheet for core material layer 11 shown in Fig. 3(b) and the sheet for core material layer 11 shown in Fig. 12, wherein through holes 16P correspond to the penetrated portions. In addition, the penetrated portions 16P may take a linear shape in a plan view of the sheet for core material layer 11 as shown in Figs. 19(a) and 19(b). In Figs. 19(a) and 19(b), the black-colored portions represent the penetrated portions 16P. In addition, the penetrated portions 16P are formed so that part of the divided portions 13 are not completely separated from the sheet for core material layer 11. In other words, the penetrated portions 16P are formed so that all of the divided portions 13 are integrated.

In Fig. 19(a), multiple penetrated portions 16P are provided so that they extend in the same direction as each other, thereby enhancing the formability into a three-dimensional shape in the direction of the penetrated portions 16P lining up (from upper left to lower right in Fig. 19(a)). In Fig. 19(b), the penetrated portions 16P are provided except at the corners of the polygonal (hexagonal) dividing parts surrounding the respective divided portions 13. The reason for this is that, for example, in the case of using a wood material for the sheet for core material layer 11, if the straight portions of the polygonal dividing parts are connected, long burrs may be generated along the straight portions when the straight portions break during three-dimensional forming. In contrast, in Fig. 19(b), even if a wood material is used for the sheet for core material layer 11, burring can be suppressed while ensuring formability into a three-dimensional shape.

Regarding the method for forming the penetrated portions 16P, where the cuts 16 are formed by press-cutting, the penetrated portion 16P can be formed by partially raising the level of the blade 24 during press-cutting.

Regarding the method for forming the penetrated portion 16P, where the cuts 16 are formed by laser-cutting, the penetrated portion 16P can be formed by making the irradiation time of the laser beam L longer than at the portions where the cuts 16 are to be formed (for example, the laser irradiation head 61 passes twice) in moving the laser irradiation head 61 in a planar direction, or by making the intensity of the laser beam L stronger. Further, in the case of a sheet for core material layer 11 having a large thickness, the laser irradiation head 61 is moved in a planar direction so that the laser irradiation head 61 passes over the same area multiple times (so that multiple laser-cuttings are conducted). In that case, for example, the half-cut cuts 16 are formed by turning on the laser beam irradiation at the first passage of the laser irradiation head 61 and turning off the laser beam irradiation at the second passage of the laser irradiation head 61, and the penetrated portions 16P are formed by turning on the laser beam irradiation at both the first and second passages of the laser irradiation head 61.

### [Fifth variation to the present embodiment]

In the present variation, on the face 11f or 11b on the side of the sheet for core material layer 11 that is brought into contact with the first sheet for skin material 31A in the transfer step (or in the lamination step where the composite material 30 is manufactured by the procedure (two lamination steps) of FIG. 9), a plurality of pressure sensitive adhesive layers 40 (multiple pressure sensitive adhesive layers 40) are laminated in order to provide or enhance the initial adhesive strength of the sheet for core material layer 11 to the first sheet for skin material 31A and to maintain the planar position of the sheet for core material layer 11 on the first sheet for skin material 31A. The plurality of pressure sensitive adhesive layers 40 are disposed in a dispersed state, spaced apart from each other on one face 11f or 11b side of the sheet for core material layer 11.

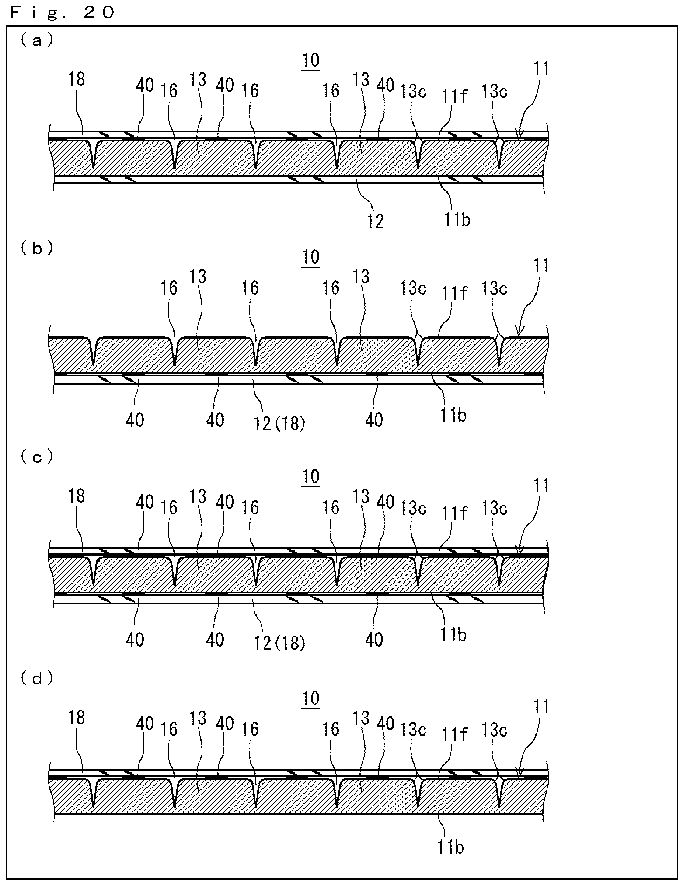

As shown in Fig. 20, the respective pressure sensitive adhesive layers 40 are composed of a thin film pressure sensitive adhesive and are formed in the form of dots, for example, in a plan view. The respective pressure sensitive adhesive layers 40 cover part of the surface of the divided portion 13 where they are laminated on the front face 11f of the sheet for core material layer 11, and cover part of the back face corresponding to the divided portion 13 where they are laminated on the back face 11b of the sheet for core material layer 11. In addition, the pressure sensitive adhesive layer 40 is not limited to the form of dots, but may be formed in a linear shape in a plan view.

To laminate the plurality of pressure sensitive adhesive layers 40 onto the sheet for core material layer 11, an adhesive layer-attached sheet with a plurality of pressure sensitive adhesive layers 40 laminated on one face of an easily-releasable sheet (for example a resin sheet made by treating a PET film with silicone), for example by printing, may be used. By attaching the pressure sensitive adhesive layer 40 side of the adhesive layer-attached sheet to the material sheet 111 before the cutting step or the material sheet 111 (sheet for core material layer 11) after the cutting step, and peeling off the easily-releasable sheet, the plurality of pressure sensitive adhesive layers 40 are transferred onto the material sheet 111.

A protective sheet 18 covering the plurality of pressure sensitive adhesive layers 40 is laminated on the faces 11f or 11b side of the sheet for core material layer 11 on which the plurality of pressure sensitive adhesive layers 40 are laminated. For the protective sheet material 18, for example, a sheet (or film) made of resin, a sheet (or film) made of paper and the like may be used. In addition, the thickness of the respective pressure sensitive adhesive layers 40 is smaller than each of the retaining sheet 12 and the protective sheet 18.

In the sheet for core material layer 11 shown in Fig. 20(a), a plurality of pressure sensitive adhesive layers 40 are laminated on the front face 11f of the sheet for core material layer 11. In the sheet for core material layer 11 shown in Fig. 20(a), as in Fig. 7, the front face 11f of the sheet for core material layer 11 is laminated on and attached to the first sheet for skin material 31A during the transfer step. Where prepreg is used as the first sheet for skin material 31A, some of them may have a low adhesiveness surface, and where woven fabrics of reinforcement fibers (for example carbon fiber, glass fiber and the like) are used as the first sheet for skin material 31A, the surface may have no adhesiveness. In these cases, the plurality of pressure sensitive adhesive layers 40 maintain the planar position of the sheet for core material layer 11 on the first sheet for skin material 31A.

In addition, in Figure 20(a), there is a gap between the front face 11f of the sheet for core material layer 11 and the protective sheet 18, but this gap is drawn for convenience only, and the protective sheet 18 is actually in substantial contact with the sheet for core material layer 11. The same is true for Figures 20(b)-20(d).

In the sheet for core material layer 11 in Fig. 20(b), a plurality of pressure sensitive adhesive layers 40 are laminated on the back face 11b of the sheet for core material layer 11. In Fig. 20(b), the retaining sheet 12 also serves as the protective sheet 18 covering the plurality of pressure sensitive adhesive layers 40, but the retaining sheet 12 may be laminated on the front face 11f of the sheet for core material layer 11 and the protective sheet 18 may be laminated on the back face 11b of the sheet for core material layer 11.

Referring to the sheet for core material layer 11 shown in Fig. 20(b), the back face 11b of the sheet for core material layer 11 is laminated on and attached to the first sheet for skin material 31A in the transfer step, as in Fig. 8(c) for example. In this case, too, the planar position of the sheet for core material layer 11 on the first sheet for skin material 31A is maintained by a plurality of pressure sensitive adhesive layers 40.

In addition, a plurality of pressure sensitive adhesive layers 40 (multiple pressure sensitive adhesive layers 40) may be laminated on the faces 11f or 11b on the side of the sheet for core material layer 11 that is brought into contact with the second sheet for skin material 32A in the lamination step, in order to maintain the planar position of the second sheet for skin material 32A with respect to the sheet for core material layer 11. In this case, as shown in Fig. 20(c), a plurality of pressure sensitive adhesive layers 40 (multiple pressure sensitive adhesive layers 40) are laminated on each of the front face 11f and the back face 11b of the sheet for core material layer 11.

Further, as shown in Fig. 20(d), a plurality of pressure sensitive adhesive layers 40 (multiple pressure sensitive adhesive layers 40) may be laminated on the front face 11f of the sheet for core material layer 11 having no retaining sheet 12

In addition, where a plurality of pressure sensitive adhesive layers 40 are not provided, it is possible to consider forming a pressure sensitive adhesive layer over a wide area on one side of the sheets for skin material 31A and 32A or the sheet for core material layer 11 using a double-sided pressure sensitive adhesive tape or a spray glue in order to provide or enhance initial adhesive strength. Compared with such a pressure sensitive adhesive layer, where a plurality of pressure sensitive adhesive layers 40 are partially provided, the pressure sensitive adhesive layers is less likely to interfere with the adhesive strength on the interface of the prepreg matrix resin, the RTM resin and the like (interface between the sheets for skin material 31A and 32A and the sheet for core material layer 11).

### [Other variations]

In the above-described embodiment and its variations (hereinafter referred to as "embodiment and the like"), the core material layer 33 in the composite material 30 is one layer, but a plurality of core material layers 33 may be provided in the composite material 30. In this case, a sheet material such as prepreg or a sheet-shaped adhesive may be provided between the core material layers 33 in manufacturing the composite material 30. Further, the composite material 30 may be manufactured by laminating a plurality of laminated materials having a canape structure, each of which has the sheet for core material layer 11 and a skin material 31 to which the sheet for core material layer 11 is attached.

In the embodiment and the like, all of the divided portions 13 in the sheet for core material layer 11 (core material layer 33) do not have to have the same planar shape and size, and the planar shape and size of the divided portions 13 may be different from each other according to the curvatures of portions of the composite material 30.

In the embodiment and the like, a woven fabric of reinforcement fibers may be used for the sheets for skin material 31A and 32A, which are the materials for each skin material 31 and 32. In this case, a plurality of pressure sensitive adhesive layers 40 shown in Fig. 20 may be provided on both sides or one side of the sheet for core material layer 11. This allows the laminated material 30B to be easily obtained by the same procedure as shown in Fig. 7, Fig. 9 or Fig. 15. The composite material 30 can then be obtained by supplying a flowable resin to the laminated material 30B from outside by RTM and the like and curing the resin.

In the embodiment and the like, the composite material 30 may omit one of the skin material sheets 31 and 32 and have a canape structure.

### INDUSTRIAL APPLICABILITY

The present invention is applicable to sheet for core materials and the like to be used in manufacturing composite materials.

### DESCRIPTION OF REFERENCE CHARACTERS

10 sheet for core material
11 sheet for core material layer
12 Retaining Sheet
13 Divided Portion
13c Chamfered portion (trace)
16 cut
30 Composite material
31, 32 skin material
33 Core material layer

## Claims

1. A sheet for core material to be used for manufacturing a composite material, comprising a sheet for core material layer to be used for a core material layer of the composite material in which a plurality of divided portions divided from each other with cuts formed by half-cutting one face side of the sheet for core material layer in a direction of its thickness are arranged two-dimensionally in a plan view,
the sheet for core material layer having traces that half-cutting is conducted by press-cutting or laser-cutting.

2. The sheet for core material according to the Claim 1, further comprising a retaining sheet attached to and covering the one face or the other face of the sheet for core material layer.

3. The sheet for core material according to Claim, 1, wherein adjacent divided portions are connected to each other by a portion extending through the thickness from a valley bottom of the cut to the other face of the sheet for core material layer.

4. The sheet for core material according to any one of Claims 1 to 3, wherein in the sheet for core material layer, part of dividing parts dividing the plurality of divided portions from each other consist of cuts made by half-cutting and the rest of the dividing parts consist of penetrated portions made by full-cutting.

5. The sheet for core material according to any one of Claims 1 to 3, wherein the cut takes a V-shaped valley shape in cross sectional view.

6. The sheet for core material according to any one of Claims 1 to 3, wherein a depth of the cut is 60% or more of a thickness of the sheet for core material layer.

7. A composite material, comprising:
the sheet for core material layer according to any one of Claims 1 to 3; and
a skin material laminated on the sheet for core material layer.

8. The composite material according to Claim 7, wherein the composite material has a curved portion in a cross-sectional view, and
wherein, in the curved portion, an opening side of the cuts in the sheet for core material layer face an expanding side of the curved portion in a cross-sectional view.

9. A sheet for core material to be used for manufacturing a composite material, comprising:
a sheet for core material layer to be used for a core layer of the composite material in which a plurality of divided portions divided from each other with cuts formed by half-cutting one face side of the sheet for core material layer in a direction of its thickness are arranged two-dimensionally in a plan view; and
a retaining sheet attached to and covering the one face or the other face of the sheet for core material layer material.

10. A method for manufacturing a sheet for core material comprising a sheet for core material layer to be used for a core material layer of a composite material, comprising a cutting step in which the sheet for core material layer, in which a plurality of divided portions divided from each other with cuts formed by half-cutting one face side of the sheet for core material layer in a direction of its thickness are arranged two-dimensionally in a plan view, is produced by forming the cuts; and
wherein the half-cutting is conducted by press-cutting or laser-cutting.

11. The method for manufacturing a composite material in which the sheet for core material layer according to Claim 10 is laminated on a skin material, comprising:
a laminating step in which the sheet for core material is laminated on a sheet for skin material as a material for the skin material; and
a curing step in which the sheet for skin material is cured.

12. A method for manufacturing a composite material, comprising:
an attaching step in which a sheet for core material is attached to a sheet for skin material as a material for a skin material of the composite material, the sheet for core material comprising a sheet for core material layer in which a plurality of divided portions divided from each other with cuts formed by half-cutting one face side of the sheet for core material layer in a direction of its thickness are arranged two-dimensionally in a plan view and a retaining sheet attached to and covering one face or the other face of the sheet for core material layer material; and
a sheet peeling-off step, after the attaching step, in which the retaining sheet is peeled off from the sheet for core material layer to transfer the sheet for core material layer to the sheet for skin material.
